# EUROPÄISCHE PATENTSCHRIFT

(11) **EP 3 581 083 B1**
(45) Veröffentlichungstag und Bekanntmachung des Hinweises auf die Patenterteilung: **20.05.2020**
(21) Anmeldenummer: 19179817.2
(22) Anmeldetag: 12.06.2019
(51) Int. Cl.: A47L 11/40, G05D 1/02

(54) **REINIGUNGSSYSTEM, UMFASSEND VERSORGUNGSROBOTER UND REINIGUNGSSATELLITEN, UND VERFAHREN ZUR REINIGUNG**
CLEANING SYSTEM COMPRISING SUPPLY ROBOT AND CLEANING SATELLITES AND METHOD FOR CLEANING
SYSTÈME DE NETTOYAGE COMPORTANT UN ROBOT D'ALIMENTATION ET DES SATELLITES DE NETTOYAGE ET PROCÉDÉ DE NETTOYAGE

(30) Priorität: 15.06.2018 DE 102018114476
(43) Veröffentlichungstag der Anmeldung: 18.12.2019
(73) Patentinhaber: Fraunhofer-Gesellschaft zur Förderung der angewandten Forschung e.V., 80686 München (DE)
(72) Erfinder: Hesse, Max, 01069 Dresden (DE); Boye, André, 01156 Dresden (DE)
(74) Vertreter: Gottfried, Hans-Peter

(56) Entgegenhaltungen:
- WO-A1-2016/193177
- WO-A1-2017/177672
- DE-A1-102015 216 272
- JP-A- 2003 180 587
- US-A1- 2010 050 366

## Beschreibung

Die Erfindung betrifft ein Reinigungssystem für Oberflächen in einem Anwendungsraum, ausgebildet zum selbsttätigen und autonomen Betrieb, umfassend wenigstens einen selbsttätig beweglichen Versorgungsroboter und wenigstens einen selbsttätig beweglichen Reinigungssatelliten, wobei zwischen dem wenigstens einen Versorgungsroboter und dem wenigstens einen Reinigungssatelliten eine steuerungstechnische Verknüpfung zum kooperierenden Betrieb besteht, und ein Verfahren zur Reinigung. Derartige Reinigungssysteme und -verfahren sind aus dem Stand der Technik bekannt.

Die Patentschrift KR 101467341 B1 zeigt einen Versorgungsroboter, der auch selbst reinigen kann, und zeigt einen Satelliten, die über einen Schlauch verbunden und auch entkoppelt sein können. Die Verbindung über den Schlauch besteht jedoch nur, um von dem Satelliten in seiner Ruheposition in einem besonderen Aufbewahrungsraum im Versorgungsroboter den aufgenommenen Staub abzusaugen. Wenn der Satellit reinigt, besteht die Verbindung nicht.

Die Druckschrift US 2010 0 050 366 A1 beschreibt ein autonomes Staubsaugersystem, das einen Verbindungsluftschlauch mit elektrischen Energie- und Signalleitungen zwischen einer Behältereinheit des Staubsaugersystems und einem robotischen Reinigungskopf aufweist. Die Behältereinheit kann selbstständig fahren und steuern. Der Reinigungskopf weist neben einer Reinigungsdüse ein eigenes Antriebssystem auf.

Ein weiteres Reinigungssystem für Oberflächen wird in der WO 2016/193177 A1 beschrieben.

Nachteilig ist bei den bekannten Systemen jedoch, dass sie auf das Absaugen von Stäuben beschränkt sind und eine umfassende Reinigung aller Bereiche nicht möglich ist.

Aufgabe der vorliegenden Erfindung ist es daher, ein Reinigungssystem anzubieten, das eine umfassende Reinigungsleistung erbringt und auch schwer zugängliche Areale reinigt.

Die Aufgabe wird gelöst durch ein Reinigungssystem für Oberflächen in einem Anwendungsraum, ausgebildet zum selbsttätigen und autonomen Betrieb, umfassend wenigstens einen selbsttätig beweglichen Versorgungsroboter und wenigstens einen selbsttätig beweglichen Reinigungssatelliten. Zwischen dem wenigstens einen Versorgungsroboter und dem wenigstens einen Reinigungssatelliten besteht eine steuerungstechnische Verknüpfung zum kooperierenden Betrieb. Der Versorgungsroboter legt dabei vergleichsweise größere Strecken zurück, der oder die Reinigungssatelliten bewegen sich vorrangig in der Umgebung des Standorts des Versorgungsroboters.

Nach der Erfindung ist vorgesehen, dass der wenigstens eine Versorgungsroboter wenigstens einen Hilfsstoff, zumindest Reinigungsmittel, aber auch Spülwasser oder Elektroenergie, zur kontinuierlichen oder diskontinuierlichen Abgabe an den wenigstens einen Reinigungssatelliten vorhält. Eine kontinuierliche Abgabe erfolgt, wenn zwischen dem Versorgungsroboter und dem Reinigungssatelliten eine dauerhafte Verbindung zumindest zur Übertragung von Hilfsstoffen zumindest für den Reinigungsvorgang besteht. Währenddessen können der Hilfsstoff und auch Energie vom Versorgungsroboter auf den Reinigungssatelliten übertragen werden. Der Reinigungssatellit benötigt dann keine eigenen Speichermöglichkeiten, weder einen Hilfsstofftank, noch einen Energiespeicher mit nennenswerter Kapazität. Der Versorgungsroboter nähert sich dazu dem zu reinigenden Bereich, so dass nur eine möglichst kurze Schlauchverbindung zwischen dem Versorgungsroboter und dem Reinigungssatelliten nötig ist.

Bei der diskontinuierlichen Abgabe erfolgt eine Übertragung von Hilfsstoff, in der Regel auch von Energie, vom Versorgungsroboter auf eine eigene Speichermöglichkeit des Reinigungssatelliten, beispielsweise einen Hilfsstofftank bzw. eine aufladbare Batterie. Die Reinigungssatelliten können aber auch direkt an der Servicestation aufgeladen werden. Hilfsstofftank und Batterie sind in Abhängigkeit vom verfügbaren Bauraum so dimensioniert, dass eine möglichst lange autonome Betriebsphase des Reinigungssatelliten ermöglicht wird, ehe er zum Versorgungsroboter zurückkehren und sich mit diesem zur Aufnahme von neuem Hilfsstoff über einen Satellitenstutzen an einen Sekundärstutzen des Versorgungsroboters andocken und sich mit diesem verbinden muss.

Der wenigstens eine Versorgungsroboter ist in der Lage, sich selbsttätig mittels eines Antriebs und einer damit verknüpften Steuerung zu einer Servicestation zu bewegen. Die Steuerung des Versorgungsroboters und ebenso der Reinigungssatelliten ist so ausgeführt, dass eine eigenständige Orientierung zumindest im Anwendungsraum, beispielsweise durch Verarbeitung einer mittels Sensoren bestimmten Position und in Abgleich mit gespeicherten Kartendaten des Anwendungsraums, möglich ist. Aus diesen Funktionen ergibt sich, dass der Versorgungsroboter und die Reinigungssatelliten selbsttätig beweglich sind.

An der Servicestation kann der Versorgungsroboter den wenigstens einen Hilfsstoff, zumindest Reinigungsmittel, bei Erfordernis beispielsweise auch Spülwasser und Energie, aus der Servicestation entnehmen. Dazu weist die Servicestation einen Servicestutzen auf, der Versorgungsroboter einen Primärstutzen, der geeignet ist zur Verbindung mit dem Servicestutzen. Der Versorgungsroboter kann nach Aufnahme des oder der Hilfsstoffe über die Stutzen zum Ort der Reinigungsaufgabe zurückkehren, um zumindest den wenigstens einen Hilfsstoff, bevorzugt auch Energie, an den wenigstens einen Reinigungssatelliten zu übertragen. Der Versorgungsroboter hat bevorzugt einen oder mehrere Tanks für unterschiedliche Hilfsstoffe und Schmutzwasser, sofern dessen Aufnahme vorgesehen ist. In dem Fall können auch nicht benötigte Hilfsstoffe sowie Schmutzwasser aus dem Reinigungssatelliten aufgenommen und zur Servicestation zurückgebracht werden, ohne dass eine gesonderte Fahrt hierfür nötig würde oder dass keine weiteren Hilfsstoffe bevorratet werden könnten.

Bevorzugt ist der Versorgungsroboter zur Übernahme von Reinigungsaufgaben ausgeführt, um beispielsweise leicht zugängliche Bereiche oder auf dem ohnehin zurückzulegenden Weg zur Servicestation Reinigungsaufgaben zu übernehmen. Hierzu ist der Versorgungsroboter insbesondere mit einer Reinigungsvorrichtung ausgestattet.

Der wenigstens eine Reinigungssatellit ist vorteilhafterweise als ein selbstfahrendes Reinigungsgerät oder als eine selbsttätig flugfähige Reinigungsdrohne ausgebildet. Das selbstfahrende Reinigungsgerät ist sehr kompakt ausgeführt, um in möglichst enge Bereiche vordringen zu können. Vor allem ist eine geringe Bauhöhe vorteilhaft, um unter eng über dem Boden montierten Anlagenteilen reinigen zu können. Dabei ist es vorgesehen, in diesen Bereichen sowohl den Boden als auch die Unterseite der Anlagenteile zu reinigen.

Wie oben bereits erläutert, kann sich der wenigstens eine Reinigungssatellit während der Reinigung über eine Schlauchverbindung zumindest zur Übertragung des wenigstens einen Hilfsstoffs, aber auch von Energie, z. B. Elektroenergie zur unmittelbaren Versorgung oder zum Aufladen von Akkus, und/ oder zur bevorzugt bidirektionalen Signalübertragung mit dem Versorgungsroboter über geeignete Einrichtungen verbinden. Die Verbindung wird zum Auftanken des Versorgungsroboters aufgehoben, damit sich der Versorgungsroboter selbstständig zur Servicestation bewegen kann. In dem Fall ist es vorteilhaft, wenigstens einen weiteren Versorgungsroboter einzusetzen, damit die Reinigungsarbeiten in der Zwischenzeit durch die Reinigungssatelliten fortgesetzt werden können.

Die verbindenden Schläuche werden bevorzugt in den Versorgungsroboter eingezogen, um zum erneuten Verbinden in definierter Position vorzuliegen. Alternativ ist ein Kupplungsadapter vorgesehen, der das Verbinden zwischen Versorgungsroboter und Reinigungssatellit unterstützt.

Eine autonome Reinigungstätigkeit setzt zumindest eine intelligente Steuerung voraus, die in der Lage ist, das jeweilige Reinigungsgerät in Abhängigkeit von den räumlichen Gegebenheiten zu bewegen. Dazu ist es Grundvoraussetzung, dass die räumlichen Gegebenheiten und die eigene Position des Reinigungsgeräts bekannt sind, somit eine Orientierung möglich ist. Zur Orientierung in der Umgebung, insbesondere in einem Raum und relativ zu den zu reinigenden Oberflächen, können der wenigstens eine Versorgungsroboter und/ oder der wenigstens eine Reinigungssatellit eine Umgebung durch eine Referenzfahrt, wobei auch eine Flugbewegung einer Reinigungsdrohne umfasst ist, erkennen und kartieren, d. h. ein dreidimensionales digitales Abbild des Raums und der zu reinigenden Oberflächen erstellen und abspeichern.

Es hat sich als vorteilhaft erwiesen, auf den wenigstens einen Versorgungsroboter und/oder den wenigstens einen Reinigungssatelliten Kartendaten zur Orientierung in der Umgebung zu übertragen. Dies macht eine Referenzfahrt entbehrlich oder vereinfacht diese zumindest, wenn eine Kombination von Referenzfahrt und vorgegebenen Kartendaten der Orientierung dienen sollen. In dem Fall werden die vorgegebenen Kartendaten überprüft, aktualisiert und mit weiteren Details angereichert, die beispielsweise Verschmutzungen oder besonders zu Verschmutzung neigende Orte oder Bauteile umfassen können.

Eine Referenzfahrt liefert nur dann die gewünschten Ergebnisse, wenn an dem wenigstens einen Versorgungsroboter und/oder dem wenigstens einen Reinigungssatelliten eine Positionssensoreinrichtung, die mehrere Positionssensoren umfassen kann, u. a. beispielsweise auf der Basis von Radarstrahlung, zur Überwachung der Bewegungsbahnen und zur Anpassung und Aktualisierung der Kartendaten und zur Positionsverifizierung vorgesehen sind.

Eine vorteilhafte Feststellung von Verschmutzungen ist möglich, wenn wenigstens eine Verschmutzungssensoreinrichtung, die mehrere Verschmutzungssensoren umfassen kann, zur Verwendung mit dem wenigstens einen Versorgungsroboter und/ oder dem wenigstens einen Reinigungssatelliten vorgesehen ist. Der wenigstens eine Versorgungsroboter und/ oder der wenigstens eine Reinigungssatellit kann die Oberflächen zumindest an Problempunkten, wie z. B. auf Anlagen und Rohrleitungen, unter Anlagen und in anderen schlecht zugänglichen Bereichen, auf die Verschmutzung hin untersuchen. Dabei hat es sich als vorteilhaft erwiesen, wenn insbesondere die Art der Verschmutzung (z. B. Fett- oder Stärkerückstände), deren Zustand (z. B. eingetrocknet, verdorben), die Menge bzw. Dicke der Schmutzschicht und deren sonstige Eigenschaften ermittelt werden.

Mit diesen Daten können globale, nicht schnell anpassbare Reinigungsparameter, z. B. Temperatur, Art der einzusetzenden Reinigungsmittel, Ablauf des Reinigungsvorgangs bzw. erforderliche Wiederholungen determiniert werden. Es kann weiterhin eine lokale und bedarfsgerechte Festlegung von schnell veränderlichen Parametern (z. B. Druck, Bewegungsgeschwindigkeit der Düse bzw. des Reinigungssatelliten oder die Konzentration der Reinigungsmittel). Die Änderung der Konzentration der Reinigungsmittel wird bei einer besonders vorteilhaften Ausführungsform schnell erreicht über eine Dosierung mittels Injektorblock. Auch die eine lokale und bedarfsgerechte Festlegung von schnell veränderlichen Parametern erfolgt in Abhängigkeit des vorgefundenen Verschmutzungszustandes

Die Eigenschaften der Verschmutzung werden nach einer weiteren vorteilhaften Ausgestaltung der Erfindung, sofern von einem der Reinigungssatelliten ermittelt, an den Versorgungsroboter übertragen, der auf dieser Basis den wenigstens einen Hilfsstoff, vor allem Reinigungsmittel, der erforderlichen Art bzw. Arten, Anzahl und Menge aufnimmt, ggf. auch abhängig vom Zeitpunkt im Ablauf des Reinigungsvorgangs. Ist nur ein Tank im Versorgungsroboter vorhanden, kann der Hilfsstoff an der Servicestation ausgetauscht werden, z. B. von Lösemittel auf Spülmittel, von Schaumkonzentrat auf Spülwasser.

Für eine schnelle und effektive Anwendung der Reinigungssatelliten ist es vorteilhaft, wenn wenigstens zwei Versorgungsroboter vorgesehen sind, von denen der eine die Reinigungssatelliten versorgt, während der andere mit der Servicestation in Verbindung tritt, um den wenigstens einen Hilfsstoff zu tanken und sich in Bereitschaft zur Versorgung der Reinigungssatelliten zu begeben. Beide kooperieren steuerungstechnisch, nicht zuletzt auch in der Koordination der den Versorgungsrobotern zugewiesenen Reinigungsaufgaben.

Ein weiterer Aspekt der Erfindung betrifft ein Verfahren zur Reinigung mittels eines Reinigungssystems, das in der Lage ist, auf Grundlage von Eigenschaften der Verschmutzung globale und lokale Reinigungsparameter zu determinieren, wie zuvor beschrieben, wobei zunächst eine Reinigungsfahrt erfolgt. Im Anschluss daran erfolgt eine Kontrollfahrt, bei der Restverschmutzungen ermittelt, protokolliert und bei Erfordernis durch Nachreinigung beseitigt werden. Besondere Vorteile ergeben sich, wenn auf Grundlage der protokollierten Restverschmutzungen eine Veränderung des Reinigungsprozesses erfolgt mit dem Ziel eines selbstständigen Erlernens optimierter Reinigungsvorgänge.

Ein besonders vorteilhafter Einsatz der Erfindung ist bei Lebensmittelverarbeitungsmaschinen und -anlagen möglich. Neben der automatisierten Reinigung von Böden um die Anlagen in deren Aufstellebene können auch Bereiche über den Anlagen in höheren Ebenen sowie schwer zugängliche Bereiche darunter gereinigt werden. Hierzu kommen unterschiedlich ausgebildete Reinigungssatelliten, wie z. B. die oben beschriebenen, das Reinigungsfahrzeug und die Reinigungsdrohne, zum Einsatz. Sie sind an ihre jeweilige Aufgabe angepasst. Eine besondere Herausforderung ist die Reinigung in einer höheren Ebene über dem Boden. Das kann durch einen Reinigungssatelliten erfolgen, der auf diese Ebene gehoben wird oder sich durch eine Flugeinrichtung, wie im Fall der Reinigungsdrohne, auf diese Ebene begeben kann. Dadurch können beispielsweise die Oberseiten großer Tanks oder auch von Rohrleitungen gereinigt werden. Entsprechendes gilt für die Reinigung der Lebensmittelverarbeitungsanlagen von außen und in ihrem Inneren sowie von Kühl- und Räucherkammern. Die Reinigung des Bodens unter den Anlagen, deren Unterseite und der Maschinenfüße erfordert hingegen eine besonders flache und kompakte Bauweise, wie es bei dem oben beschriebenen Reinigungsfahrzeug der Fall ist.

Vom Konzept der Erfindung ist auch eine Lösung umfasst, bei der die Kombination von Versorgungsrobotern mit Reinigungssatelliten in mehreren Ebenen erfolgt, d. h. ein Reinigungssatellit kann zugleich als Versorgungsroboter für einen weiteren, in der Regel noch kleineren oder mit anderen Funktionen ausgestatteten Reinigungssatelliten dienen. Kommen mehrere Reinigungssatelliten zum Einsatz, arbeiten diese bevorzugt koordiniert zusammen.

Anhand der Beschreibung von Ausführungsbeispielen und ihrer Darstellung in den zugehörigen Zeichnungen wird die Erfindung nachfolgend näher erläutert. Es zeigen:
Fig. 1: eine schematische Darstellung einer Ausführungsform eines erfindungsgemäßen Reinigungssystems;
Fig. 2: eine schematische Darstellung einer weiteren Ausführungsform eines erfindungsgemäßen Reinigungssystems;
Fig. 3: eine schematische Darstellung einer Ausführungsform eines Versorgungsroboters eines erfindungsgemäßen Reinigungssystems;
Fig. 4: eine schematische Darstellung einer Ausführungsform eines Reinigungsfahrzeugs eines erfindungsgemäßen Reinigungssystems und
Fig. 5: eine schematische Darstellung einer Ausführungsform einer Reinigungsdrohne eines erfindungsgemäßen Reinigungssystems.

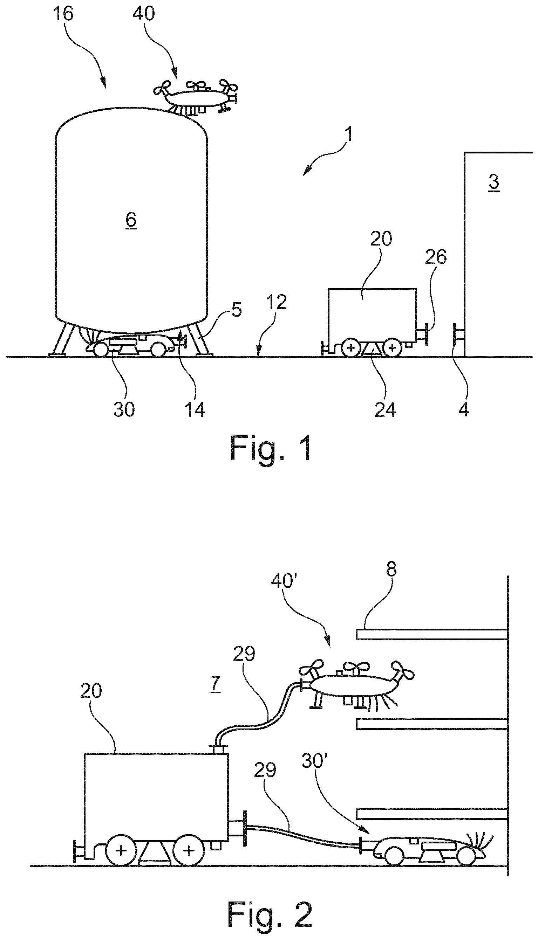

Fig. 1 zeigt eine schematische Darstellung einer Ausführungsform eines erfindungsgemäßen Reinigungssystems 1 bei der erfindungsgemäß vorgesehenen Funktion in einer Umgebung, in der unterschiedliche Reinigungsaufgaben zu lösen sind. Problemschwerpunkt bei der Reinigung ist die Anlage 6, hier schematisch in Form eines großen Tanks dargestellt. Die Anlage 6 steht mit Maschinenfüßen 5 auf einer Oberfläche 12, dem Boden der Halle oder des Raums, in dem die Anlage 6 installiert ist. Als Bestandteile des Reinigungssystems 1 sind eine Servicestation 3, ein Versorgungsroboter 20, ein Reinigungsfahrzeug 30 und eine Reinigungsdrohne 40 dargestellt.

Größere freie Bereiche der Oberfläche 12, die auch auf herkömmliche Weise gereinigt werden könnten, werden nach dem vorliegenden Ausführungsbeispiel mittels einer Reinigungsvorrichtung 24 behandelt, mit der der Versorgungsroboter 20 ausgestattet ist. Ein schlecht zugänglicher Bereich der Oberfläche 12 unter der Anlage 6 wird mithilfe des Reinigungsfahrzeugs 30 behandelt, das durch seine niedrige Bauform in diesen Bereich vordringen kann. Das Reinigungsfahrzeug 30 übernimmt zugleich auch die Reinigung der Unterseite der Anlage 6, der Oberfläche 14, sowie der Maschinenfüße 5. Die Oberseite der Anlage 6, die Oberfläche 16, wird durch die Reinigungsdrohne 40 behandelt, die auch andere hoch gelegene Oberflächen, wie zum Beispiel die Seitenflächen der Anlage 6 oder Rohrleitungen, behandeln kann.

Neben den vorgenannten Reinigungsaufgaben besteht der vordergründige Zweck des Versorgungsroboters 20 im Rahmen des erfindungsgemäßen Reinigungssystems 1 jedoch darin, die Reinigungssatelliten, also das Reinigungsfahrzeug 30 und die Reinigungsdrohne 40 im vorliegenden Ausführungsbeispiel, zumindest mit erforderlichen Hilfsstoffen, insbesondere Reinigungsmitteln und Spülmitteln, zu versorgen. Darüber hinaus ist auch eine Energieversorgung vorgesehen, indem beispielsweise die Reinigungssatelliten 30, 40 (sowie 30', 40' gemäß Fig. 2) an dem Versorgungsroboter 20 ihre Akkus aufladen können. Die Aufladung kann gemäß einer alternativen Ausführungsform auch direkt an der Servicestation erfolgen.

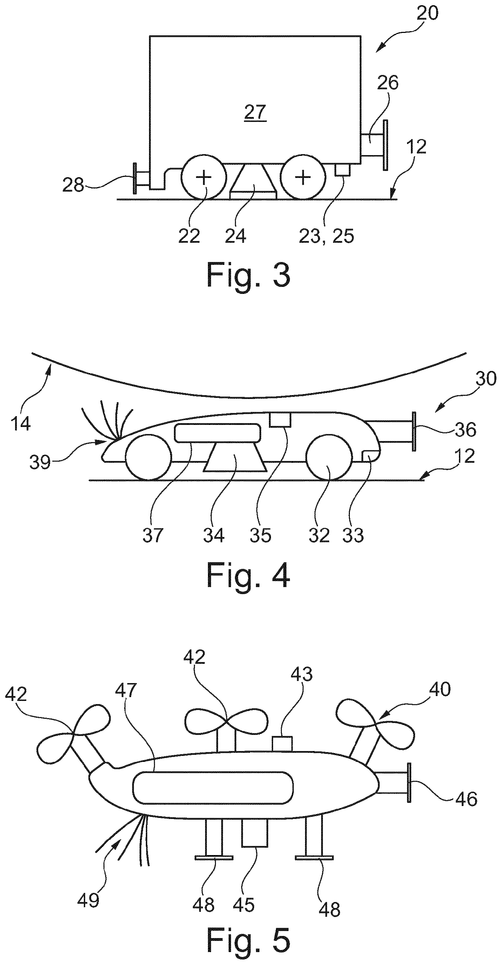

Um die Hilfsstoffe, die in der Servicestation 3 lagern, übernehmen zu können, haben die Servicestation 3 und der Versorgungsroboter 20 kompatible, koppelbare Anschlüsse. Die Servicestation 3 besitzt demnach den Servicestutzen 4, der Versorgungsroboter 20 den Primärstutzen 26. Neben dem Primärstutzen 26, der zur Verbindung mit der Servicestation 3 dient, besitzt der Versorgungsroboter 20 vorteilhafterweise wenigstens einen weiteren Stutzen, einen Sekundärstutzen 28. Dieser ist durch seine Lage und seine Dimensionen zur Koppelung mit den Reinigungssatelliten 30, 40 (sowie 30', 40' gemäß Fig. 2) ausgeführt. Die Reinigungssatelliten 30, 40 (sowie 30', 40' gemäß Fig. 2) weisen ihrerseits kompatible Stutzen auf, wie in den Figuren 3 und 4 im Detail dargestellt ist.

Neben der Versorgung sind die Stutzen auch zur Entsorgung aufgenommenen Schmutzwassers ausgeführt, sofern die Ausführungsform von Versorgungsroboter 20 und Reinigungssatelliten 30, 40 (sowie 30', 40' gemäß Fig. 2) eine Aufnahme von Schmutzwasser nach der Reinigung vorsieht.

Fig. 2 zeigt eine schematische Darstellung einer weiteren Ausführungsform eines erfindungsgemäßen Reinigungssystems bei der Anwendung zur Reinigung einer Kühlkammer 7 mit eingebauten Regalböden 8. Im Unterschied zur Ausführungsform, die in Fig. 1 dargestellt ist, erfolgt die Übertragung von Hilfsstoffen vom Versorgungsroboter zu den Reinigungssatelliten 30', 40' mittels eines Schlauchs 29, der gleichermaßen so ausgestaltet sein kann, dass beispielsweise zusätzlich Elektroenergie oder Signale übertragen werden können. Dadurch kann dort auf einen eigenen Hilfsstofftank 37, 47 (vgl. Figuren 4 und 5) verzichtet und die Reinigungssatelliten 30', 40' kleiner und leichter ausgeführt werden.

Fig. 3 zeigt eine schematische Darstellung einer Ausführungsform eines Versorgungsroboters 20 eines erfindungsgemäßen Reinigungssystems 1, wie in den Figuren 1 und 2 dargestellt. Die Funktion des Primärstutzen 26 und des Sekundärstutzens 28 wurden bereits zuvor beschrieben. Dies trifft ebenfalls auf die Reinigungsvorrichtung 24 zu. Für eine autonome Bewegung auf der Oberfläche 12 besitzt der Versorgungsroboter 20 ein Fahrwerk 22, im einfachsten Fall mit vier Rädern einschließlich Antrieb, wie im Ausführungsbeispiel dargestellt.

Im Inneren des Versorgungsroboters 20 befindet sich zumindest ein Hilfsstoffvorratstank 27, der nach dem Andocken an die Servicestation befüllt werden kann und dessen Inhalt dann an die später angedockten Reinigungssatelliten abgegeben werden kann. Die Abgabe erfolgt entweder permanent über einen während des Reinigungsvorgangs der Reinigungssatelliten mit dem Versorgungsroboter 20 verbundenen Schlauch 29 (hier nicht dargestellt, vgl. Fig. 2), der auch andere Leitungen wie Energie- und Steuerleitungen umfassen kann, oder über ein zeitweises Andocken der Reinigungssatelliten 30, 30', 40, 40' an den Sekundärstutzen 28 mit dem Ziel, den Hilfsstofftank 37, 47 in den Reinigungssatelliten 30, 30', 40, 40' (vergleiche Figuren 4 und 5) zu befüllen oder, bei einem Wechsel des Hilfsstoffs, zunächst zu entleeren. Entsprechendes gilt umgekehrt, wenn vorgesehen ist, Schmutzwasser aufzunehmen. So kann beispielsweise Reinigungsmittel abgezogen, in den Versorgungsroboter 20 zurückgegeben und Spülmitteln eingefüllt werden. In dem Fall ist nur ein einziger Tank mit einer höheren Kapazität vorgesehen. Im Vergleich zu einer Lösung mit mehreren Tanks kann die jeweilige Reinigungsphase länger durchgeführt werden, ehe ein erneutes Befüllen erforderlich wird. Dies gilt gleichermaßen für die Reinigungssatelliten 30, 30', 40, 40' und den Versorgungsroboter 20, wenn diese jeweils nur einen Tank besitzen.

Entsprechend erfolgt die Energieversorgung, beispielsweise mit Elektroenergie, die ebenfalls während des Andockens von der Servicestation 3 auf den Versorgungsroboter 20 und vom Versorgungsroboter 20 auf die Reinigungssatelliten 30, 30', 40, 40' übertragen werden kann.

Der Versorgungsroboter 20 weist zudem eine Positionssensoreinrichtung 23 auf. Diese kann aus mehreren Sensoren, bevorzugt mit jeweils unterschiedlicher Wirkungsweise, bestehen, gegebenenfalls auch in Wechselwirkung mit Landmarken, die im Aktionsbereich des Versorgungsroboters 20, beispielsweise auf der Oberfläche 12, zuvor angebracht wurden. Die Positionssensoreinrichtung 23 kann in Zusammenwirken mit einer entsprechend verbundenen Verarbeitungs-, Speicher- und Steuereinrichtung (hier nicht dargestellt) bei einer Referenzfahrt die Umgebung erkunden und kartieren, wobei das Ergebnis in einem Speicher abgelegt und zur koordinierten Steuerung der Bewegungen von Versorgungsroboter 20 und Reinigungssatelliten 30, 30', 40, 40' abgerufen werden kann. Abgesehen von dieser Möglichkeit kann die Speichereinrichtung bereits von Beginn an mit den erforderlichen Kartendaten versehen werden, wobei diese auch durch eine zusätzliche Referenzfahrt abgeglichen, detailliert oder aktualisiert werden können.

Weiterhin umfasst der Versorgungsroboter 20 eine Verschmutzungssensoreinrichtung 25, die auf der Oberfläche 12 vorhandene Verschmutzungen ermittelt, deren Eigenschaften feststellt und, in Zusammenwirken mit der Positionssensoreinrichtung 23, deren Standort feststellt. Die so gewonnenen Daten werden dann verarbeitet und über die Steuereinrichtung zur Steuerung des Fahrwerks und der Reinigungsvorrichtung 24 verwandt. Darüber hinaus wird auf Basis dieser Daten ein Reinigungsregime festgelegt und die dafür notwendigen Hilfsstoffe werden von der Servicestation 3 abgerufen.

Fig. 4 zeigt eine schematische Darstellung einer Ausführungsform eines Reinigungsfahrzeugs 30 eines erfindungsgemäßen Reinigungssystems 1, wie in Fig. 1 dargestellt. Das Reinigungsfahrzeug 30 als einer Ausführungsform eines Reinigungssatelliten weist eine sehr geringe Bauhöhe auf, damit es sich in schwer zugängliche, niedrige Bereiche vorarbeiten kann. Dies ist in dem in Fig. 1 dargestellten Anwendungsfall die Unterseite der Anlage 6. Dort wird der Boden 12 mit der Reinigungsvorrichtung 34 gereinigt und die Unterseite der Anlage 6, die Oberfläche 14, mittels einer weiteren, nach oben wirkenden Reinigungsvorrichtung, hier ausgeführt als wenigstens eine Reinigungsdüse 39. Diese kann ein Reinigungsmittel bevorzugt gerichtet, beispielsweise nach oben hin, absprühen und damit die Oberfläche 14 reinigen.

Die dargestellte Ausführungsform ist nicht zur Verbindung mit dem Versorgungsroboter 20 über einen Versorgungsschlauch vorgesehen, sondern weist einen eigenen Hilfsstofftank 37 auf, in dem Hilfsstoffe für den vorgesehenen Reinigungsvorgang gespeichert werden können. Sind diese aufgebraucht, kehrt das Reinigungsfahrzeug 30 zurück zum Versorgungsroboter 20 und verbindet den Satellitenstutzen 36 mit dem Sekundärstutzen 28 des Versorgungsroboters 20, sodass der Hilfsstofftank 37 erneut befüllt werden kann.

Auf dieselbe Weise erfolgt auch ein Austausch von Hilfsstoffen. Wenn beispielsweise der Einsatz von Reinigungsmittel beendet, der Hilfsstofftank 37 aber noch nicht leer ist, kann das übrige Reinigungsmittel an den Versorgungsroboter 20 abgegeben werden und an dessen Stelle beispielsweise ein Spülmittel eingefüllt werden, um im Nachgang den zuvor durch das Reinigungsfahrzeug gereinigten Bereich zu spülen. Eine Positionssensoreinrichtung 33 umfasst diejenigen Funktionen in gleicher Weise, die bereits zuvor für den Versorgungsroboter 20 beschrieben wurden. Gleiches gilt für eine Verschmutzungssensoreinrichtung 35, die dann zusätzlich auch Verschmutzungen der Oberfläche 14 erfassen kann.

Fig. 5 zeigt eine schematische Darstellung einer Ausführungsform einer Reinigungsdrohne 40 eines erfindungsgemäßen Reinigungssystems. Diese umfasst eine Hebeeinrichtung 42, im dargestellten Ausführungsbeispiel dargestellt durch Rotoren. In seinem Inneren weist auch die Reinigungsdrohne 40 einen Hilfsstofftank 47 auf, der über den Satellitenstutzen 46 befüllt werden kann. Alternativ hierzu ist eine permanente Koppelung über einen Schlauch 29, der auch andere Leitungen wie Energie- oder Signalleitungen umfassen kann, vorgesehen. Eine solche Lösung mit einer Reinigungsdrohne 40' zeigt Fig. 2.

Die Reinigungsdrohne 40 kann bei der Koppelung auf ihre Füße 48 aufgestellt werden. Eine Positionssensoreinrichtung 43 umfasst diejenigen Funktionen in gleicher Weise, die bereits zuvor für den Versorgungsroboter 20 beschrieben wurden. Gleiches gilt für eine Verschmutzungssensoreinrichtung 45, die dann zusätzlich auch Verschmutzungen der Oberfläche 16 erfassen kann, was gleichermaßen für Seitenfläche oder andere Bereiche gilt. Zur Reinigung hoch gelegener Oberflächen 16 ist die Reinigungsdrohne 40 in der Lage, Reinigungsmittel in eine vorgegebene Richtung, beispielsweise nach unten hin, abzugeben. Dafür ist die Reinigungsdüse 49 vorgesehen.

### Bezugszeichenliste

- 1: Reinigungssystem
- 3: Servicestation
- 4: Servicestutzen
- 5: Maschinenfuß
- 6: Anlage
- 12: Oberfläche (Boden)
- 14: Oberfläche (Unterseite)
- 16: Oberfläche (Oberseite)
- 20: Versorgungsroboter
- 22: Fahrwerk
- 23: Positionssensoreinrichtung
- 24: Reinigungsvorrichtung
- 25: Verschmutzungssensoreinrichtung
- 26: Primärstutzen
- 27: Hilfsstoffvorratstank
- 28: Sekundärstutzen
- 29: Schlauch
- 30, 30': Reinigungsfahrzeug, Reinigungssatellit
- 32: Fahrwerk
- 33: Positionssensoreinrichtung
- 34: Reinigungsvorrichtung
- 35: Verschmutzungssensoreinrichtung
- 36: Satellitenstutzen
- 37: Hilfsstofftank
- 39: Reinigungsdüse
- 40, 40': Reinigungsdrohne, Reinigungssatellit
- 42: Hebeeinrichtung
- 43: Positionssensoreinrichtung
- 45: Verschmutzungssensoreinrichtung
- 46: Satellitenstutzen
- 47: Hilfsstofftank
- 48: Fuß
- 49: Reinigungsdüse

## Patentansprüche

1. Reinigungssystem für Oberflächen (12, 14, 16) in einem Anwendungsraum, ausgebildet zum selbsttätigen und autonomen Betrieb, umfassend wenigstens einen selbsttätig beweglichen Versorgungsroboter (20) und wenigstens einen selbsttätig beweglichen Reinigungssatelliten (30, 30', 40, 40'), wobei zwischen dem wenigstens einen Versorgungsroboter (20) und dem wenigstens einen Reinigungssatelliten (30, 30', 40, 40') eine steuerungstechnische Verknüpfung zum kooperierenden Betrieb besteht, **dadurch gekennzeichnet, dass** der wenigstens eine Versorgungsroboter (20) wenigstens einen Hilfsstoff zur kontinuierlichen oder diskontinuierlichen Abgabe aus einem Hilfsstoffvorratstank (27) an den wenigstens einen Reinigungssatelliten (30, 30', 40, 40') vorhalten kann und der wenigstens eine Versorgungsroboter (20) selbsttätig den wenigstens einen Hilfsstoff und Energie aus einer Servicestation (3) entnehmen und zum Ort der Reinigungsaufgabe auf der Oberfläche (12, 14, 16) und zumindest zur Übertragung des wenigstens einen Hilfsstoffs an den wenigstens einen Reinigungssatelliten (30, 30', 40, 40') zurückkehren kann.

2. Reinigungssystem nach Anspruch 1, wobei der Versorgungsroboter (20) eine Reinigungsvorrichtung (24) umfasst und zur Übernahme von Reinigungsaufgaben ausgeführt ist.

3. Reinigungssystem nach einem der vorherigen Ansprüche, wobei sich der wenigstens eine Reinigungssatellit (30, 30', 40, 40') zum Reinigungsvorgang über eine Schlauchverbindung zumindest zur Übertragung des wenigstens einen Hilfsstoffs mit dem Versorgungsroboter (20) verbinden kann.

4. Reinigungssystem nach einem der vorherigen Ansprüche, wobei zur Orientierung im Raum und relativ zu den Oberflächen (12, 14, 16) der wenigstens eine Versorgungsroboter (20) und/oder der wenigstens eine Reinigungssatellit (30, 30', 40, 40') eine Umgebung durch eine Referenzfahrt erkennen und kartieren können.

5. Reinigungssystem nach einem der vorherigen Ansprüche, wobei auf den wenigstens einen Versorgungsroboter (20) und/oder den wenigstens einen Reinigungssatelliten (30, 30', 40, 40') Kartendaten zur Orientierung in der Umgebung übertragen werden können.

6. Reinigungssystem nach Anspruch 4 oder 5, wobei an dem wenigstens einen Versorgungsroboter (20) und/oder dem wenigstens einen Reinigungssatelliten (30, 30', 40, 40') eine Positionssensoreinrichtnung (23, 33, 43) zur Überwachung von Bewegungsbahnen und zur Anpassung und Aktualisierung der Kartendaten und zur Positionsverifizierung vorgesehen sind.

7. Reinigungssystem nach einem der vorherigen Ansprüche, wobei wenigstens eine Verschmutzungssensoreinrichtung (25, 35, 45) zur Verwendung mit dem wenigstens einen Versorgungsroboter (20) und/oder dem wenigstens einen Reinigungssatelliten (30, 30', 40, 40') vorgesehen ist, der die Oberflächen (12, 14, 16) zumindest an Problempunkten auf die Verschmutzung und deren Eigenschaften untersuchen kann.

8. Reinigungssystem nach Anspruch 7, wobei anhand der Eigenschaften der Verschmutzung globale und lokale Reinigungsparameter determiniert werden können.

9. Reinigungssystem nach einem der vorherigen Ansprüche, wobei wenigstens zwei Versorgungsroboter (20) vorgesehen sind.

10. Reinigungssystem nach einem der vorherigen Ansprüche, wobei der wenigstens eine Reinigungssatellit (30, 30', 40, 40') als Reinigungsfahrzeug (30, 30') oder als flugfähige Reinigungsdrohne (40, 40') ausgebildet ist.

11. Verfahren zur Reinigung von Oberflächen (12, 14, 16) mittels eines Reinigungssystems nach Anspruch 1, wobei der wenigstens eine Versorgungsroboter (20) und der wenigstens eine Reinigungssatellit (30, 30', 40, 40') zu einem kooperierenden Betrieb steuerungstechnisch verknüpft sind, **dadurch gekennzeichnet, dass** der wenigstens eine Versorgungsroboter (20) wenigstens einen Hilfsstoff zur kontinuierlichen oder diskontinuierlichen Abgabe aus einem Hilfsstoffvorratstank (27) an den wenigstens einen Reinigungssatelliten (30, 30', 40, 40') vorhält und der wenigstens eine Versorgungsroboter (20) selbsttätig den wenigstens einen Hilfsstoff und Energie aus einer Servicestation (3) entnimmt und zum Ort der Reinigungsaufgabe auf der Oberfläche (12, 14, 16) und zumindest zur Übertragung des wenigstens einen Hilfsstoffs an den wenigstens einen Reinigungssatelliten (30, 30', 40, 40') zurückkehrt.

12. Verfahren nach Anspruch 11, wobei ein Reinigungssystem nach Anspruch 7 vorgesehen ist, eine Reinigungsfahrt erfolgt und im Anschluss daran eine Kontrollfahrt, bei der Restverschmutzungen ermittelt, protokolliert und nachgereinigt werden.

13. Verfahren nach Anspruch 12, wobei auf Grundlage der protokollierten Restverschmutzungen eine Veränderung des Reinigungsprozesses erfolgt mit dem Ziel eines selbstständigen Erlernens optimierter Reinigungsvorgänge.

## Claims

1. A cleaning system for surfaces (12, 14, 16) in an application space, configured for automatic and autonomous operation, comprising at least one automatically movable supply robot (20) and at least one automatically movable cleaning satellite (30, 30', 40, 40'), wherein a control link for co-operative operation exists between the at least one supply robot (20) and the at least one cleaning satellite (30, 30', 40, 40'), **characterized in that** the at least one supply robot (20) can provision at least one auxiliary material for continuous or discontinuous delivery from an auxiliary material storage tank (27) to the at least one cleaning satellite (30, 30', 40, 40'), and that the at least one supply robot (20) can automatically draw the at least one auxiliary material and energy from a service station (3) and return to the location of the cleaning task on the surface (12, 14, 16) to at least transfer the at least one auxiliary material to the at least one cleaning satellite (30, 30', 40, 40').

2. The cleaning system according to claim 1, wherein the supply robot (20) comprises a cleaning apparatus (24) and is configured to take over cleaning tasks.

3. The cleaning system according to any one of the preceding claims, wherein the at least one cleaning satellite (30, 30', 40, 40') can connect to the supply robot (20) for the cleaning process via a hose connection to at least transfer the at least one auxiliary material.

4. The cleaning system according to any one of the preceding claims, wherein for orientation in space and relative to the surfaces (12, 14, 16) the at least one supply robot (20) and/or the at least one cleaning satellite (30, 30', 40, 40') can recognize and map an environment through a reference run.

5. The cleaning system according to any one of the preceding claims, wherein map data for orientation in the environment can be transmitted to the at least one supply robot (20) and/or the at least one cleaning satellite (30, 30', 40, 40').

6. The cleaning system according to claim 4 or 5, wherein a position sensor device (23, 33, 43) is provided on the at least one supply robot (20) and/or the at least one cleaning satellite (30, 30', 40, 40') for monitoring motion paths and for adapting and updating the map data and for position verification.

7. The cleaning system according to any one of the preceding claims, wherein at least one contamination sensor device (25, 35, 45) is provided for use with the at least one supply robot (20) and/or the at least one cleaning satellite (30, 30', 40, 40'), which can examine the surfaces (12, 14, 16) for the contamination and its characteristics at least at problem spots.

8. The cleaning system according to claim 7, wherein global and local cleaning parameters can be determined based on the characteristics of the contamination.

9. The cleaning system according to any one of the preceding claims, wherein at least two supply robots (20) are provided.

10. The cleaning system according to any one of the preceding claims, wherein the at least one cleaning satellite (30, 30', 40, 40') is configured as a cleaning vehicle (30, 30') or an airborne cleaning drone (40, 40').

11. A method for cleaning surfaces (12, 14, 16) using a cleaning system according to claim 1, wherein the at least one supply robot (20) and the at least one cleaning satellite (30, 30', 40, 40') are linked in a control relationship for co-operative operation, **characterized in that** the at least one supply robot (20) provisions at least one auxiliary material for continuous or discontinuous delivery from an auxiliary material storage tank (27) to the at least one cleaning satellite (30, 30', 40, 40'), and that the at least one supply robot (20) automatically draws the at least one auxiliary material and energy from a service station (3) and returns to the location of the cleaning task on the surface (12, 14, 16) to at least transfer the at least one auxiliary material to the at least one cleaning satellite (30, 30', 40, 40').

12. The method according to claim 11, wherein a cleaning system according to claim 7 is provided and a cleaning run is performed which is followed by a control run in which residual contaminations are identified, recorded, and post-cleaned.

13. The method according to claim 12, wherein the cleaning process is modified based on the recorded residual contaminations with the aim of independently learning optimized cleaning processes.

## Revendications

1. Système de nettoyage pour surfaces (12, 14, 16) dans une pièce d'utilisation, réalisé pour le fonctionnement automatique et autonome, comprenant au moins un robot d'alimentation automatiquement mobile (20) et au moins un satellite de nettoyage automatiquement mobile (30, 30', 40, 40'), dans lequel une liaison technique de commande pour le fonctionnement coopératif existe entre l'au moins un robot d'alimentation (20) et l'au moins un satellite de nettoyage (30, 30', 40, 40'), **caractérisé en ce que** l'au moins un robot d'alimentation (20) peut fournir au moins un produit consommable secondaire pour la distribution continue ou discontinue d'un réservoir de produit consommable secondaire (27) à l'au moins un satellite de nettoyage (30, 30', 40, 40') et l'au moins un robot d'alimentation (20) peut prélever automatiquement l'au moins un produit consommable secondaire et de l'énergie d'une station-service (3) et retourner sur le lieu de la tâche de nettoyage sur la surface (12, 14, 16) et au moins pour la transmission de l'au moins un produit consommable secondaire à l'au moins un satellite de nettoyage (30, 30', 40, 40').

2. Système de nettoyage selon la revendication 1, dans lequel le robot d'alimentation (20) comprend un dispositif de nettoyage (24) et est réalisé pour la prise en charge de tâches de nettoyage.

3. Système de nettoyage selon une des revendications précédentes, dans lequel l'au moins un satellite de nettoyage (30, 30', 40, 40') peut se connecter au robot d'alimentation (20) pour le processus de nettoyage par le biais d'une connexion par tuyaux flexibles au moins pour la transmission de l'au moins un produit consommable secondaire.

4. Système de nettoyage selon une des revendications précédentes, dans lequel l'au moins un robot d'alimentation (20) et/ou l'au moins un satellite de nettoyage (30, 30', 40, 40') peuvent reconnaître et cartographier un environnement par un trajet de référence pour l'orientation dans la pièce et par rapport aux surfaces (12, 14, 16).

5. Système de nettoyage selon une des revendications précédentes, dans lequel des données de carte pour l'orientation dans l'environnement peuvent être transmises à l'au moins un robot d'alimentation (20) et/ou l'au moins un satellite de nettoyage (30, 30', 40, 40').

6. Système de nettoyage selon la revendication 4 ou 5, dans lequel un dispositif de capteur de position (23, 33, 43) est prévu sur l'au moins un robot d'alimentation (20) et/ou l'au moins un satellite de nettoyage (30, 30', 40, 40') pour la surveillance de voies de déplacement et pour l'adaptation et l'actualisation des données de carte et pour la vérification de position.

7. Système de nettoyage selon une des revendications précédentes, dans lequel au moins un dispositif de capteur de salissure (25, 35, 45) est prévu pour l'utilisation avec l'au moins un robot d'alimentation (20) et/ou l'au moins un satellite de nettoyage (30, 30', 40, 40'), lequel peut contrôler les surfaces (12, 14, 16) au moins à des points problématiques à la recherche de la salissure et de ses propriétés.

8. Système de nettoyage selon la revendication 7, dans lequel des paramètres de nettoyage globaux et locaux peuvent être déterminés à l'aide des propriétés de la salissure.

9. Système de nettoyage selon une des revendications précédentes, dans lequel au moins deux robots d'alimentation (20) sont prévus.

10. Système de nettoyage selon une des revendications précédentes, dans lequel l'au moins un satellite de nettoyage (30, 30', 40, 40') est réalisé en tant que véhicule de nettoyage (30, 30') ou en tant que drone de nettoyage volant (40, 40').

11. Procédé de nettoyage de surfaces (12, 14, 16) au moins d'un système de nettoyage selon la revendication 1, dans lequel l'au moins un robot d'alimentation (20) et l'au moins un satellite de nettoyage (30, 30', 40, 40') sont reliés au niveau de la technique de commande pour un fonctionnement coopératif, **caractérisé en ce que** l'au moins un robot d'alimentation (20) fournit au moins un produit consommable secondaire pour la distribution continue ou discontinue d'un réservoir de produit consommable secondaire (27) à l'au moins un satellite de nettoyage (30, 30', 40, 40') et l'au moins un robot d'alimentation (20) prélève automatiquement l'au moins un produit consommable secondaire et de l'énergie d'une station-service (3) et retourne sur le lieu de la tâche de nettoyage sur la surface (12, 14, 16) et au moins pour la transmission de l'au moins un produit consommable secondaire à l'au moins un satellite de nettoyage (30, 30', 40, 40').

12. Procédé selon la revendication 11, dans lequel un système de nettoyage selon la revendication 7 est prévu, un trajet de nettoyage a lieu et un trajet de contrôle à la suite de celui-ci lors duquel des salissures résiduelles sont identifiées, consignées et nettoyées de manière subséquente.

13. Procédé selon la revendication 12, dans lequel une modification du processus de nettoyage a lieu sur la base des salissures résiduelles consignées avec le but d'un apprentissage autonome de processus de nettoyage optimisés.
